# EUROPÄISCHE PATENTANMELDUNG

(11) **EP 0 603 424 A1**
(43) Veröffentlichungstag der Anmeldung: **29.06.1994**
(21) Anmeldenummer: 92121721.2
(22) Anmeldetag: 21.12.1992
(51) Int. Cl.: H04L 12/56, H04Q 11/04

(54) **Verfahren und Schaltungsanordnung zum Übertragen von Nachrichtenzellen über eine ATM-Kommunikationseinrichtung**

(71) Anmelder: SIEMENS AKTIENGESELLSCHAFT, D-80333 München (DE)
(72) Erfinder: Stegherr, Michael, Dr. Dipl.-Ing., W-8014 Neubiberg (DE); Beck, Christoph, Dipl.-Ing., W-8031 Eichenau (DE); Pfäffel, Bruno, Dipl.-Phys., W-8011 Höhenkirchen (DE); Tanzke, Rüdiger, Dr. Dipl.-Ing., W-8000 München 81 (DE)

(57) **Zusammenfassung**

Für die Übertragung von auf einer Zubringerleitung (ZL) mit einer bestimmten Übertragungsbitrate auftretenden und unterschiedlichen virtuellen Verbindungen bzw. virtuellen Pfaden zugehörigen Nachrichtenzellen über für eine niedrigere Übertragungsbitrate ausgelegte Eingänge einer ATM-Kommunikationseinrichtung (ATM-K) ist eine Schnittstelleneinrichtung (SSE) vorgesehen. Diese weist eine Mehrzahl von mit der Zubringerleitung verbundenen Behandlungseinrichtungen (MBHE, SBHE1,..., SBHE3) auf, welche ausgangsseitig jeweils an wenigstens einen der genannten Eingänge angeschlossen sind. Dabei werden die Nachrichtenzellen unter der Steuerung einer der Behandlungseinrichtungen als Master-Behandlungseinrichtung (MBHE) auf sämtliche Behandlungseinrichtungen zyklisch verteilt und anschließend von diesen aus unter Beifügen einer für die jeweilige virtuelle Verbindung bzw. den jeweiligen virtuellen Pfad gerade geltenden Folgenummer an die ATM-Kommunikationseinrichtung weitergeleitet.

## Beschreibung

Die Erfindung betrifft ein Verfahren und eine Schaltungsanordnung gemäß Oberbegriff des Patentanspruches 1 bzw. des Patentanspruches 4.

Ein derartiges Verfahren und eine derartige Schaltungsanordnung sind bereits durch die nicht vorveröffentlichte europäische Patentanmeldung 92 11 7498.9 vorgeschlagen worden. Dabei ist bei diesen vorgesehen, daß die einer virtuellen Verbindung zugehörigen Nachrichtenzellen zunächst depaketiert werden. Die in den Nachrichtenzellen enthaltenen Nachrichtensignale werden anschließend in aufeinanderfolgende Signalabschnitte unterteilt, deren jeweilige Bitanzahl derart einheitlich festgelegt ist, daß diese zuzüglich einer festgelegten Anzahl von Informationsbits der Anzahl der in dem Informationsteil einer Nachrichtenzelle als Nutzsignale übertragbaren Bits entspricht. Diese Signalabschnitte werden dann nacheinander in die Informationsteile von Nachrichtenzellen eingefügt, wobei in die Informationsteile jeweils als Informationsbits dabei eine sich fortlaufend verändernde Signalabschnitt-Folgenummer eingetragen wird. Diese Nachrichtenzellen werden dann nacheinander auf eine dem Bitratenverhältnis der ersten zur zweiten Übertragungsbitrate entsprechende Anzahl von Eingängen eines ATM-Netzes verteilt und über die betreffenden Eingänge zu diesen zugeordneten Ausgängen des ATM-Netzes hin übertragen. Den an den betreffenden Ausgängen auftretenden Nachrichtenzellen werden der in diesen jeweils enthaltene Signalabschnitt sowie die diesem zugehörige Signalabschnitt-Folgenummer entnommen. Aus der Folge der Signalabschnitte für die jeweilige virtuelle Verbindung werden dann Nachrichtensignale gebildet, deren Bitanzahl jeweils der Anzahl der in dem Informationsteil einer Nachrichtenzelle als Nutzsignale übertragbaren Bits entspricht. Anschließend werden die Nachrichtensignale nacheinander in die jeweilige virtuelle Verbindung bezeichnende Nachrichtenzellen eingefügt, welche mit der ursprünglichen Übertragungsbitrate weitergeleitet werden.

Darüber hinaus ist bereits ein Verfahren zur Vermittlung von Nachrichtenzellen eines einen Nachrichtenzellenstrom nach einem asynchronen Übertragungsverfahren transportierenden Übertragungssystems über ein mit Moduln sufgebautes Koppelfeld vorgeschlagen worden (nicht vorveröffentlichte europäische Patentanmeldung 91 10 7434.2). Die Transportbitrate des Übertragungssystems beträgt ein Mehrfaches der Übertragungsbitrate der Koppelelemente der Module. Zu vermittelnde Nachrichtenzellen werden dabei auf eine dem Mehrfachen entsprechende Anzahl von Koppelfeldeingängen jeweils unter Hinzufügen von Informationen verteilt. Diese Informationen bezeichnen dabei alle diejenigen Module, über die die jeweiligen Nachrichtenzellen zu einem Ausgang des Koppelfeldes durchgeschaltet werden sollen. Die zu verschiedenen Ausgängen übertragenen Nachrichtenzellen werden dann wieder zu einem Nachrichtenzellenstrom zusammengefaßt. Dabei ist u .a. vorgesehen, daß den Nachrichtenzellen vor der Durchschaltung durch das Koppelfeld verbindungsindividuell eine zyklisch fortlaufende Folgenummer hinzugefügt wird, anhand der bei der Zusammenfassung zu dem Nachrichtenzellenstrom die Reihenfolge der Nachrichtenzellen für jede Verbindung sichergestellt wird, und daß die Nachrichtenzellen auf die Koppelfeldeingänge zyklisch verteilt werden.

Es ist nun Aufgabe der vorliegenden Erfindung, einen Weg zu zeigen, wie ein Verfahren und eine Schaltungsanordnung der eingangs genannten Art ausgebildet werden können, um auf der Zubringerleitung auftretende Nachrichtenzellen auf eine Mehrzahl von Eingängen einer ATM-Kommunikationseinrichtung zu verteilen und dabei für eine Rückgewinnung des ursprünglichen Nachrichtenzellen-Stromes nach Durchlauf der einzelnen Nachrichtenzellen durch die ATM-Kommunikationseinrichtung die Reihenfolge der Nachrichtenzellen jeder virtuellen Verbindung bzw. jedes virtuellen Pfades sicherzustellen.

Gelöst wird diese Aufgabe bei einem Verfahren gemäß Oberbegriff des Patentanspruches 1 durch die in diesem Patentanspruch angegebenen Verfahrensmerkmale.

Der Vorteil der Erfindung besteht dabei darin, daß durch die Steuerung sämtlicher Behandlungseinrichtungen durch die Master-Behandlungseinrichtung mit einem relativ geringen Steuerungsaufwand eine Synchronisierung der Behandlungseinrichtungen sowohl für die Aufnahme als auch für die Weiterleitung von Nachrichtenzellen an die ATM-Kommunikationseinrichtung sichergestellt ist. Ein weiterer Vorteil besteht darin, daß für diese Synchronisierung keine zentrale Steuereinrichtung erforderlich ist, sondern die Synchronisierung von einer selbst in die Aufnahme und Weiterleitung von Nachrichtenzellen einbezogenen Behandlungseinrichtung vorgenommen wird.

Zweckmäßige Ausgestaltungen des Verfahrens gemäß der vorliegenden Erfindung ergeben sich aus den Patentansprüchen 2 und 3.

Die vorstehend aufgezeigte Aufgabe wird bei einer Schaltungsanordnung gemäß Oberbegriff des Patentanspruches 4 durch die in diesem Patentanspruch angegebenen schaltungstechnischen Merkmale gelöst.

Der Vorteil dieser Schaltungsanordnung besteht dabei darin, daß mit einem relativ geringen schaltungstechnischen Aufwand die Aufnahme und Weiterleitung von Nachrichtenzellen an die ATM-Kommunikationseinrichtung unter Berücksichtigung der Reihenfolge der Nachrichtenzellen einer virtuellen Verbindung bzw. eines virtuellen Pfades sichergestellt ist. Der geringe schaltungstechnische Aufwand resultiert dabei insbesondere daraus, daß sämtliche Behandlungseinrichtungen einheitliche Elemente für die Aufnahme und Weiterleitung von Nachrichtenzellen aufweisen und lediglich die Master-Behandlungseinrichtung zusätzlich über Einrichtungen für die Synchronisierung sämtlicher Behandlungseinrichtungen verfügt.

Zweckmäßige Ausgestaltungen der Schaltungsanordnung gemäß der vorliegenden Erfindung ergeben sich aus den Patentansprüchen 5 bis 7.

Im folgenden wird nun die vorliegende Erfindung anhand von Zeichnungen beispielsweise näher erläutert.
FIG 1 zeigt in einem Blockschaltbild eine Schaltungsanordnung, bei der die vorliegende Erfindung angewandt ist,
FIG 2 und 3 zeigen Flußdiagramme, auf die im folgenden näher eingegangen wird und
FIG 4 zeigt einen möglichen Aufbau einer der in FIG 1 lediglich schematisch dargestellten Behandlungseinrichtungen.

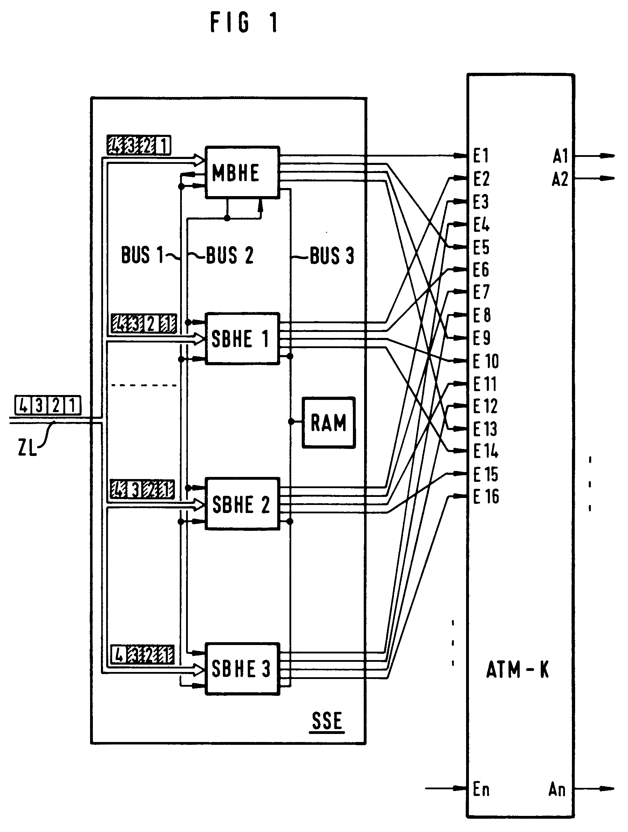

In FIG 1 ist eine nach einem asynchronen Übertragungsprinzip ("Asynchronous Transfer Mode") arbeitende ATM-Kommunikationseinrichtung ATM-K beispielsweise in Form einer Vermittlungseinrichtung dargestellt, welche eine Mehrzahl von Eingängen E1 bis En sowie eine Mehrzahl von Ausgängen A1 bis An aufweist. Die Ein- und Ausgänge sind dabei jeweils für die Aufnahme bzw. Abgabe von Nachrichtenzellen mit einer festgelegten Übertragungsbitrate ausgelegt, die jeweils über einen Zellenkopf und einen Informationsteil verfügen. Dabei ist in einem solchen Zellenkopf unter anderem ein Kennzeichen (VCI, VPI) der jeweiligen virtuellen Verbindung bzw. des jeweiligen virtuellen Pfades enthalten. An wenigstens eine festgelegte Anzahl von Eingängen E1 bis E16 ist eine Schnittstelleneinrichtung SSE angeschlossen, die eingangsseitig mit einer Zubringerleitung ZL in Verbindung steht. Über diese Zubringerleitung erfolgt eine Übertragung von Nachrichtenzellen mit einer gegenüber der für die Eingänge und Ausgänge festgelegten Übertragungsbitrate höheren Übertragungsbitrate. Die Anzahl der mit der Schnittstelleneinrichtung SSE verbundenen Eingänge entspricht dabei dem Bitratenverhältnis der für die Zubringerleitung festgelegten Übertragungsbitrate zu der für die Eingänge und Ausgänge der ATM-Kommunkationseinrichtung festgelegten Übertragungsbitrate unter Berücksichtigung einer im folgenden noch erläuterten Erweiterung der Nachrichtenzellen durch die Schnittstelleneinrichtung.

Die genannte Schnittstelleneinrichtung SSE weist eine Mehrzahl von Behandlungseinrichtungen, im vorliegenden Fall vier Behandlungseinrichtungen, auf, die eingangsseitig gemeinsam parallel an die Zubringerleitung ZL angeschlossen sind. Eine mit MBHE bezeichnete Behandlungseinrichtung dient dabei als Master-Behandlungseinrichtung. Von dieser her werden die verbleibenden drei Behandlungseinrichtungen SBHE1, SBHE2 und SNHE3 als Slave-Behandlungseinrichtungen gesteuert. Für diese Steuerung sind die Slave-Behandlungseinrichtungen über zwei gesonderte Steuerbusse BUS1 und BUS2 mit der Master-Behandlungseinrichtung verbunden. Darüber hinaus ist ein Datenbus BUS3 vorgesehen, über welchen sämtliche Behandlungseinrichtungen an eine Speicheranordnung RAM angeschlossen sind.

Nachdem zuvor anhand der FIG 1 der prinzipielle Aufbau der Schnittstelleneinrichtung SSE erläutert worden ist, wird nunmehr auf deren Wirkungsweise näher eingegangen. Die auf der Zubringerleitung ZL nacheinander auftretenden Nachrichtenzellen, die m unterschiedlichen virtuellen Verbindungen zugeordnet sein mögen, werden unter der Steuerung der Master-Behandlungseinrichtung MBHE auf die insgesamt vier vorhandenen Behandlungseinrichtungen verteilt und dort zunächst zwischengespeichert. Wie in FIG 1 schematisch am Beispiel von 4 aufeinanderfolgenden Nachrichtenzellen 1 bis 4 dargestellt ist, wird beispielsweise die erste eintreffende Nachrichtenzelle 1 von der Master-Behandlungseinrichtung selbst übernommen, während die nachfolgenden Nachrichtenzellen 2 bis 4 nacheinander den Slave-Behandlungseinrichtungen SBHE1, SBHE2 und SBHE3 zugeführt werden. Dieses zyklische Verteilen wird dann für nachfolgende Nachrichtenzellen fortgesetzt. Für die Steuerung dieser Verteilung werden dabei von der Master-Behandlungseinrichtung MBHE her über den Steuerbus BUS1 nacheinander die einzelnen Behandlungseinrichtungen bezeichnende Adressensignale übertragen, durch welche die jeweilige Behandlungseinrichtung für die Aufnahme einer Nachrichtenzelle aktiviert wird. Die Adressensignale können bei dem vorliegenden Ausführungsbeispiel in Form von zwei Bits übertragen werden, wobei beispielsweise die Bitkombination 00 der Master-Behandlungseinrichtung, die Bitkombinationen 01, 10 und 11 dagegen den Slave-Behandlungseinrichtungen SBHE1, SBHE2 und SBHE3 zugeordnet sind.

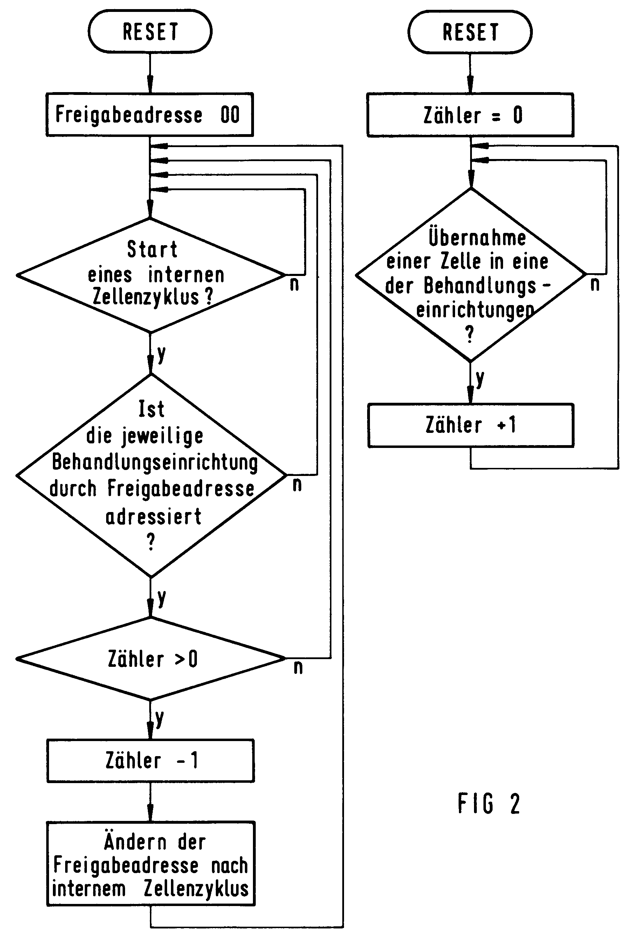

In der Master-Behandlungseinrichtung MBHE ist ein Zellenzähler beispielsweise in Form eines Zählerregisters vorgesehen, durch dessen Zählerstand die Anzahl der in den Behandlungseinrichtungen insgesamt momentan zwischengespeicherten Nachrichtenzellen erfaßt wird. Ausgehend von einem Anfangszählerstand, der beispielsweise "0" sein möge, wird dabei mit jeder Aufnahme einer Nachrichtenzelle in eine der Behandlungseinrichtungen der momentane Zählerstand inkrementiert. Die Master-Behandlungseinrichtung überwacht dafür fortlaufend das Auftreten von Nachrichtenzellen anhand des diesen jeweils vorangestellten Zellenkopfes (FIG 2, rechte Seite).

In sämtlichen Behandlungseinrichtungen einschließlich der Master-Behandlungseinrichtung werden für die Behandlung von zwischengespeicherten Nachrichtenzellen zyklisch wiederholt interne Zellenzyklen aktiviert. Dabei erfolgt die Aktivierung in den einzelnen Behandlungseinrichtungen mit einem durch die Master-Behandlungseinrichtung MBHE festgelegten Zeitversatz. Darüber hinaus gibt die Master-Behandlungseinrichtung die einzelnen Behandlungseinrichtungen einschließlich sich selbst gezielt für eine solche Behandlung frei. Dafür gibt diese Master-Behandlungseinrichtung MBHE bei einem Zählerstand > 0 des genannten Zellenzählers, d.h. bei Vorliegen zwischengespeicherter Nachrichtenzellen in den Behandlungseinrichtungen, zyklisch nacheinander Freigabeadressen, durch die die einzelnen Behandlungseinrichtungen bezeichnet sind, über den Steuerbus BUS2 ab. Die Festlegung der Freigabeadressen entspricht dabei den bereits genannten, für die Aufnahme von Nachrichtenzellen in die Behandlungseinrichtungen festgelegten Adressen.

Auf eine solche Freigabe einer Behandlungseinrichtung hin wird in der Master-Behandlungseinrichtung der Zählerstand des Zellenzählers zum Zeitpunkt der Aktivierung des nächsten irternen Zellenzyklus in der gerade freigegebenen Behandlungseinrichtung dekrementiert, wie dies auch aus dem oberen Teil des in FIG 2, linke Seite, dargestellten Flußdiagramms hervorgeht. Darüber hinaus wird durch die freigegebene Behandlungseinrichtung im Zuge des aktivierten internen Zellenzyklus der Zellenkopf der als nächste für eine Weiterleitung anstehenden Nachrichtenzelle dahingehend ausgewertet, daß das in diesem enthaltene Kennzeichen der in Frage kommenden virtuellen Verbindung bzw. des in Frage kommenden virtuellen Pfades entnommen und damit über den Datenbus BUS3 die bereits genannte Speicheranordnung RAM angesteuert wird. Diese weist eine der Anzahl der über die Zubringerleitung ZL möglichen virtuellen Verbindungen bzw. virtuellen Pfade entsprechende Anzahl von Speicherzellen auf, die diesen Verbindungen bzw. Pfaden individuell zugeordnet sind und über die in den Zellenköpfen von Nachrichtenzellen enthaltenen Kennzeichen ansteuerbar sind. In diesen Speicherzellen ist jeweils eine Folgenummer gespeichert, die einer Nachrichtenzelle der jeweiligen virtuellen Verbindung bzw. des jeweiligen virtuellen Pfades beizufügen ist.

Auf die erwähnte Ansteuerung der Speicheranordnung RAM durch ein von der Behandlungseinrichtung abgegebenes Kennzeichen hin wird die diesem zugeordnete Speicherzelle angesteuert und die darin enthaltene Folgenummer zu der betreffenden Behandlungseinrichtung hin übertragen. Anschließend, d.h. im Zuge des gerade aktivierten internen Steuerzyklus, wird durch diese Behandlungseinrichtung eine gegenüber der gerade aufgenommenen Folgenummer um einen Zahlenwert erhöhte Folgenummer in die gerade adressierte Speicherzelle der Speicheranordnung RAM zurückgeschrieben, und zwar unter Überschreiben der bisher darin gespeicherten Folgenummer.

Die in die gerade freigegebene Behandlungseinrichtung aufgenommene Folgenummer wird bei dem vorliegenden Ausführungsbeispiel in einen für die jeweilige virtuelle Verbindung bzw. für den jeweiligen virtuellen Pfad vorbereiteten internen Zellenkopf eingefügt, welcher dem in der gerade weiterzuleitenden Nachrichtenzelle enthaltenen Zellenkopf als Self-routing-Zellenkopf vorangestellt wird. Die auf diese Weise erweiterte Nachrichtenzelle wird anschließend durch die freigegebene Behandlungseinrichtung einem der mit dieser verbundenen Eingänge der ATM-Kommunikationseinrichtung ATM-K zugeführt.

Für die Auswahl des für die jeweilige virtuelle Verbindung bzw. für den jeweiligen virtuellen Pfad vorgesehenen internen Zellenkopfes ist im übrigen in jeder Behandlungseinrichtung eine lokale Speicheranordnung vorgesehen, in welcher die für die einzelnen virtuellen Verbindungen bzw. virtuellen Pfade zu benutzenden internen Zellenköpfe gespeichert sind. Die Auswahl des in Frage kommenden internen Zellenkopfes erfolgt dabei, wie bei der Ansteuerung der Speicheranordnung RAM, nach Maßgabe des in einem Zellenkopf einer gerade weiterzuleitenden Nachrichtenzelle enthaltenen Kennzeichens der virtuellen Verbindung bzw. des virtuellen Pfades.

Bei dem vorliegenden Ausführungsbeispiel wird durch die jeweilige Behandlungseinrichtung auch der ursprünglich in einer Nachrichtenzelle enthaltene Zellenkopf hinsichtlich des Kennzeichens der virtuellen Verbindung bzw. des virtuellen Pfades umgewertet, indem dieses Kennzeichen derart modifiziert wird, daß durch dieses die jeweilige virtuelle Verbindung bzw. der jeweilige virtuelle Pfad an dem in Frage kommenden Ausgang (A1 bis An) der ATM-Kommunikationseinrichtung ATM-K wieder eindeutig bezeichnet ist. Da ein solches Umwerten bereits bekannt und nicht Gegenstand vorliegender Erfindung ist, wird darauf jedoch nicht näher eingegangen.

Damit ist der interne Zellenzyklus in der von der Master-Behandlungseinrichtung MBHE gerade freigegebenen Behandlungseinrichtung abgeschlossen. Von der Master-Behandlungseinrichtung wird daraufhin durch Übertragen einer weiteren Freigabeadresse eine im Freigabezyklus nachfolgende Behandlungseinrichtung freigegeben (FIG 2), in welcher dann ebenfalls die gerade erläuterten Steuerungsvorgänge ablaufen.

Vorstehend wurde zunächst davon ausgegangen, daß mit der Aktivierung eines internen Zellenzyklus in einer durch eine Freigabeadresse freigegebenen Behandlungseinrichtung der Zählerstand des in der Master-Behandlungseinrichtung MBHE vorgesehenen, die Summe der zwischengespeicherten Nachrichtenzellen erfassenden Zellenzählers einen Wert > 0, d.h. es sind Nachrichtenzellen gespeichert, aufweist sowie anschließend dekrementiert wird und daß nach Abschluß des betreffenden internen Zellenzyklus eine geänderte Freigabeadresse durch die Master-Behandlungseinrichtung bereitgestellt wird. Es kann jedoch auch der Fall eintreten, daß mit der Aktivierung eines internen Zellenzyklus einer freigegebenen Behandlungseinrichtung in der Zähleranordnung ein Zählerstand 0 vorliegt. In diesem Falle unterbleibt, wie aus FIG 2 hervorgeht, einerseits ein Dekrementieren dieses Zählerstandes und andererseits eine Änderung der Freigabeadresse am Ende des betreffenden internen Zellenzyklus durch die Master-Behandlungseinrichtung. Die gerade freigegebene Behandlungseinrichtung leitet dabei im Zuge des gerade aktivierten internen Zellenzyklus eine vorbereitete Leerzelle an die ATM-Kommunikatiuonseinrichtung ATM-K weiter. Dies wird von dieser und den übrigen Behandlungseinrichtungen im Zuge des jeweiligen internen Zellenzyklus fortgesetzt, bis in der gerade freigegebenen Behandlungseinrichtung wieder eine weiterzuleitende Nachrichtenzelle vorliegt und demzufolge der Zellenzähler der Master-Behandlungseinrichtung MBHE wieder einen Zählerstand > 0 annimmt. Anschließend gibt dann die noch freigegebene Master-Behandlungseinrichtung die aufgenommene Nachrichtenzelle in der oben angegebenen Weise weiter und die Master-Behandlungseinrichtung gibt durch Abgabe einer geänderten Freigabeadresse eine im Zyklus nachfolgende Behandlungseinrichtung frei.

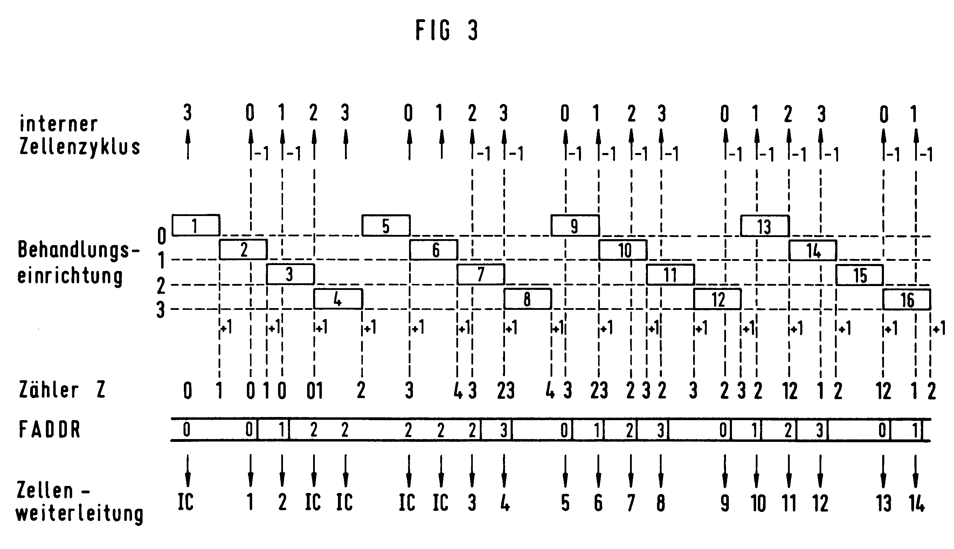

In FIG 3 sind die zuvor erläuterten Steuerungsvorgänge nochmals schematisch dargestellt. Im oberen Bereich ist dabei der Aktivierungszeitpunkt der in den einzelnen Behandlungseinrichtungen zyklisch wiederholt ablaufenden internen Zellenzyklen durch numerierte Pfeile markiert, wobei die Ziffer "0" für die Master-Behandlungseinrichtung (MBHE), die verbleibenden Ziffern 1 bis 3 für die drei Slave-Behandlungseinrichtungen (SBHE1 bis SBHE3) stehen. Darunter ist die zyklische Aufnahme von beispielsweise 16 Nachrichtenzellen in die mit 0 bis 3 bezeichneten Behandlungseinrichtungen dargestellt. Senkrechte unterbrochene Linien symbolisieren dabei die Aufnahme durch "+1" und die Weiterleitung durch "-1". Diese Markierungen sind seitlich neben den unterbrochenen Linien angebracht. Der sich daraus ergebende Zählerstand des in der Master-Behandlungseinrichtung vorhandenen Zellenzählers ergibt sich aus der mit Z bezeichneten Zeile. In der darunterliegenden, mit FADDR (Freigabeadresse) bezeichneten Zeile ist die zu jedem der im oberen Bereich der FIG 3 dargestellten internen Zellenzyklen gerade durch die Master-Behandlungseinrichtung freigegebene Behandlungseinrichtung angegeben. Schließlich sind in der letzten Zeile dieser Figur die Nummern der von den freigegebenen Behandlungseinrichtungen weitergeleiteten Nachrichtenzellen vermerkt. IC steht dabei für eine oben erwähnte Leerzelle.

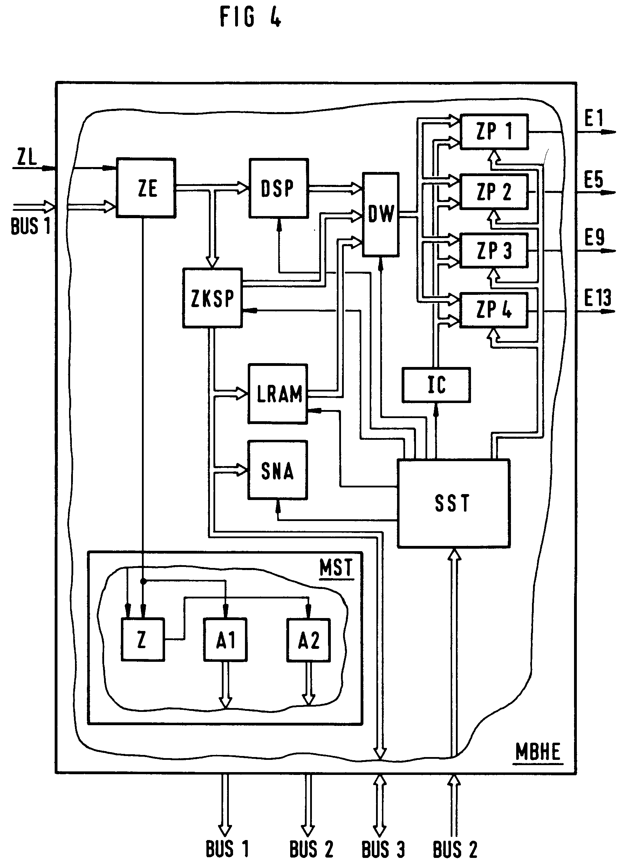

In FIG 4 ist der mögliche Aufbau einer der zuvor erläuterten, in FIG 1 dargestellten Behandlungseinrichtungen schematisch dargestellt. Dabei sind lediglich die für die Erläuterung der vorliegenden Erfindung erforderlichen Schaltungselemente angegeben. Die Behandlungseinrichtungen sind alle in gleicher Weise aufgebaut. Dabei ist die für die erwähnte Master-Funktion vorgesehene, in FIG 4 mit MST bezeichnete Steuereinrichtung lediglich in einer der Behandlungseinrichtungen aktiviert. Die Steuereinrichtung MST weist den bereits oben erwähnten Zellenzähler Z in Form eines Vor/Rückwärts-Zählers auf. Dieser steht eingangsseitig über einen Inkrementiereingang mit einer Zellenempfangseinrichtung ZE in Verbindung. Weiterhin weist die Master-Steuereinrichtung MST zwei Adressengeneratoren A1 und A2 auf. Der Adressengenerator A1 ist dabei eingangsseitig an die gerade erwähnte Zellenempfangseinrichtung ZE und ausgangsseitig an den in FIG 1 dargestellten Steuerbus BUS1 angeschlossen, um über diesen die für die zyklische Aufnahme von Nachrichtenzellen in die einzelnen Behandlungseinrichtungen erforderlichen Adressensignale bereitzustellen. Der Adressengenerator A2 ist dagegen eingangsseitig mit dem Ausgang des Zellenzählers Z und ausgangsseitig mit dem Steuerbus BUS2 verbunden, um über diesen Freigabeadressen für die einzelnen Behandlungseinrichtungen zur Weiterleitung von in diesen zwischengespeicherten Nachrichtenzellen zu übertragen. Darüber hinaus steht die Zellenempfangseinrichtung ZE mit dem Steuerbus BUS1 in Verbindung.

Die Zellenempfangseinrichtung ZE überwacht ständig das Auftreten von Nachrichtenzellen auf der Zubringerleitung ZL. Jedes Auftreten wird dabei der Master-Steuereinrichtung MST signalisiert, um den in dieser enthaltenen Zellenzähler Z zu inkrementieren. Wird dabei über den Steuerbus BUS1 eine die dargestellte Behandlungseinrichtung bezeichnende Adresse bereitgestellt, so leitet die Zellenempfangseinrichtung ZE diese weiter, anderenfalls ist dieses Weiterleiten jedoch gesperrt. Von einer solchen weitergeleiteten Nachrichtenzelle wird unter der Steuerung einer mit dem Steuerbus BUS2 verbundenen Slave-Steuereinrichtung SST der Zellenkopf in einen Zellenkopfspeicher ZKSP, der Informationsteil dagegen in einen Datenspeicher DSP übernommen. Diese weisen jeweils bei dem vorliegenden Ausführungsbeispiel eine Speicherkapazität für die Aufnahme einer Mehrzahl von Zellenköpfen bzw. Informationsteilen auf.

Durch die Slave-Steuereinrichtung SST werden die oben erwähnten internen Zellenzyklen aktiviert. Bei Vorliegen einer die dargestellte Behandlungseinrichtung bezeichnenden Freigabeadresse auf dem Steuerbus BUS2 wird bei der Aktivierung eines solchen internen Zellenzyklus zunächst der Zellenkopfspeicher ZKSP angesteuert, um das in einem Zellenkopf einer weiterzuleitenden Nachrichtenzelle enthaltene Kennzeichen für die jeweilige virtuelle Verbindung bzw. für den jeweiligen virtuellen Pfad der in FIG 1 dargestellten Speicheranordnung RAM über den Datenbus BUS3 zuzuführen. Darüber hinaus wird mit diesem Kennzeichen eine bereits oben erwähnte lokale Speicheranordnung LRAM beaufschlagt, um in dieser diejenige Speicherzelle anzusteuern, in welcher der für die jeweilige virtuelle Verbindung bzw. den jeweiligen virtuellen Pfad maßgebende interne Zellenkopf gespeichert ist. In diese Speicherzelle wird die von der Speicheranordnung RAM über den Datenbus BUS3 übertragene Folgenummer übernommen. Gleichzeitig erhält diese Folgenummer eine Korrektureinrichtung SNA zugeführt, welche dies Folgenummer korrigiert und anschließend zu der Speicheranordnung RAM über den Datenbus BUS3 zurücküberträgt.

Ausgangsseitig stehen der Datenspeicher DSP, der Zellenkopfspeicher ZKSP sowie die lokale Speicheranordnung LRAM mit einer Datenweiche DW in Verbindung, welche wiederum unter der Steuerung der Slave-Steuereinrichtung SST für eine weiterzuleitende Nachrichtenzelle zunächst den von der lokalen Speicheranordnung bereitgestellten internen Zellenkopf, anschließend den in dem Zellenkopfspeicher ZKSP gespeicherten ursprünglichen Zellenkopf und zuletzt den für die betreffende Nachrichtenzelle in dem Datenspeicher gespeicherten Informationsteil über ihren Ausgang weiterleitet. An diesem Ausgang sind vier Zellenpuffer ZP1 bis ZP4 angeschlossen, welche jeweils mit einem der in FIG 1 dargestellten Eingänge der ATM-Kommunikationseinrichtung ATM-K verbunden sind. Von der Slave-Steuereinrichtung SST wird dabei einer dieser Zellenpuffer für die Aufnahme der von der Datenweiche DW gelieferten Nachrichtenzelle ausgewählt, um über diesen die Nachrichtenzelle an die ATM-Kommunkationseinrichtung weiterzuleiten.

Die in FIG 4 dargestellte Behandlungseinrichtung weist schließlich noch einen mit den Zellenpuffern verbundenen Speicher IC für die Speicherung einer Leerzelle auf, welcher immer dann von der Slave-Steuereinrichtung her aktiviert wird, wenn, wie oben erwähnt, zum Zeitpunkt der Aktivierung eines internen Zellenzyklus in der Behandlungseinrichtung keine Nachrichtenzelle gespeichert ist.

## Patentansprüche

1. Verfahren zum Übertragen von im Zuge wenigstens einer virtuellen Verbindung bzw. wenigstens eines virtuellen Pfades mit einer ersten Übertragungsbitrate auf einer Zubringerleitung (ZL) auftretenden Nachrichtenzellen, welche jeweils aus einem Zellenkopf mit einem Kennzeichen für die jeweilige virtuellen Verbindung bzw. den jeweiligen virtuellen Pfad und einem Informationsteil gebildet sind, über eine nach einem asynchronen Transfermodus (ATM) arbeitende und eine Mehrzahl von Eingängen (E1,...,En) aufweisende ATM-Kommunikationseinrichtung (ATM-K), wobei die Eingänge jeweils für die Aufnahme von Nachrichtenzellen mit einer gegenüber der ersten Übertragungsbitrate niedrigeren zweiten Übertragungsbitrate ausgelegt sind,
**dadurch gekennzeichnet,**
daß mit der Zubringerleitung (ZL) eine Mehrzahl von Behandlungseinrichtungen in Form einer Master-Behandlungseinrichtung (MBHE) und mehreren von dieser her gesteuerten Slave-Behandlungseinrichtungen (SBHE1,..., SBHE3) verbunden ist, welche jeweils ausgangsseitig wenigstens an einen der Eingänge der ATM-Kommunikationseinrichtung (ATM-K) angeschlossen sind und die Anzahl der mit den Behandlungseinrichtungen insgesamt verbundenen Eingänge der ATM-Kommunikationseinrichtung dem Verhältnis der ersten zur zweiten Übertragungsbitrate entspricht,
daß die auf der Zubringerleitung auftretenden Nachrichtenzellen unter der Steuerung der Master-Behandlungseinrichtung (MBHE) zyklisch auf sämtliche Behandlungseinrichtungen verteilt und dort zunächst zwischengespeichert werden,
daß durch die Master-Behandlungseinrichtung (MBHE) dabei die Summe der in die Behandlungseinrichtungen aufgenommenen Nachrichtenzellen erfaßt wird,
daß den Behandlungseinrichtungen individuell für die einzelnen virtuellen Verbindungen bzw. virtuellen Pfade eine aktuelle Folgenummer für eine als nächste an die ATM-Kommunikationseinrichtung weiterzuleitende Nachrichtenzelle bereitgestellt wird,
daß in den Behandlungseinrichtungen (MBHE, SBHE1,..., SBHE3) jeweils zyklisch nacheinander mit einem festgelegten Zeitversatz ein interner Zellenzyklus aktiviert wird,
daß von der Master-Behandlungseinrichtung (MBHE) her zusätzlich diese selbst sowie die Slave-Behandlungseinrichtungen (SBHE1,...,SBHE3) individuell nacheinander für die Behandlung einer zwischengespeicherten Nachrichtenzelle freigegeben werden,
daß durch eine gerade freigegebene Behandlungseinrichtung auf das Aktivieren des nächsten, in dieser ablaufenden internen Zellenzyklus hin eine zwischengespeicherte Nachrichtenzelle unter Beifügen der für die jeweilige virtuelle Verbindung bzw. für den jeweiligen virtuellen Pfad aktuellen Folgenummer an die ATM-Kommunikationseinrichtung (ATM-K) weitergeleitet und die gerade bereitgestellte Folgenummer für eine nachfolgende Nachrichtenzelle der jeweiligen virtuellen Verbindung bzw. des jeweiligen virtuellen Pfades aktualisiert wird
und daß auf die Aktivierung eines internen Zellenzyklus einer freigegebenen Behandlungseinrichtung hin durch die Master-Behandlungseinrichtung (MBHE) lediglich bei einer erfaßten Summe > 0 für die momentan zwischengespeicherten Nachrichtenzellen diese Summe dekrementiert und am Ende des betreffenden internen Zellenzyklus eine der gerade freigegebenen Behandlungseinrichtung nachfolgende Behandlungseinrichtung freigegeben wird.

2. Verfahren nach Anspruch 1,
**dadurch gekennzeichnet,**
daß von einer Behandlungseinrichtung (MBHE, SBHE1, ..., SBHE3) im Zuge eines internen Zellenzyklus eine Leerzelle an die ATM-Kommunikationseinrichtung (ATM-K) weitergeleitet wird, falls in der jeweiligen Behandlungseinrichtung momentan keine Nachrichtenzelle gespeichert ist.

3. Verfahren nach Anspruch 1 oder 2,
**dadurch gekennzeichnet,**
daß durch die jeweilige Behandlungseinrichtung (MBHE;, SBHE1,..., SBH3) eine einer weiterzuleitenden Nachrichtenzelle beizufügende Folgenummer in einen internen, für die ATM-Kommunikationseinrichtung (ATM-K) festgelegten Zellenkopf eingefügt und dieser dem ursprünglichen Zellenkopf der weiterzuleitenden Nachrichtenzelle vorangestellt wird.

4. Schaltungsanordnung zum Übertragen von im Zuge wenigstens einer virtuellen Verbindung bzw. wenigstens eines virtuellen Pfades mit einer ersten Übertragungsbitrate auf einer Zubringerleitung (ZL) auftretenden Nachrichtenzellen, welche jeweils aus einem Zellenkopf mit einem Kennzeichen für die jeweilige virtuelle Verbindung bzw. den jeweiligen virtuellen Pfad und einem Informationsteil gebildet sind, über eine nach einem asynchronen Transfermodus (ATM) arbeitende und eine Mehrzahl von Eingängen aufweisende ATM-Kommunikationseinrichtung (ATM-K), wobei die Eingänge jeweils für die Aufnahme von Nachrichtenzellen mit einer gegenüber der ersten Übertragungsbitrate niedrigeren zweiten Übertragungsbitrate ausgelegt sind, zur Durchführung des Verfahrens nach Anspruch 1,
**dadurch gekennzeichnet,**
daß mit der Zubringerleitung (ZL) eine Mehrzahl von Behandlungseinrichtungen in Form einer Master-Behandlungseinrichtung (MBHE) und mehreren von dieser her gesteuerten Slave-Behandlungseinrichtungen (SBHE1,...,SBHE3) verbunden ist, welche jeweils ausgangsseitig wenigstens an einen der Eingänge (E1,...,E16) der ATM-Kommunikationseinrichtung (ATM-K) angeschlossen sind und die Anzahl der mit den Behandlungseinrichtungen insgesamt verbundenen Eingängen der ATM-Kommunikationseinrichtung dem Verhältnis der ersten zur zweiten Übertragungsbitrate entspricht,
daß die Master-Behandlungseinrichtung (MBHE) eine erste Steuereinrichtung (MST) aufweist,
- welche sämtliche Behandlungseinrichtungen (MBHE; SBHE1, ..., SBHE3) zyklisch nacheinander für die Aufnahme von auf der Zubringerleitung (ZL) auftretenden Nachrichtenzellen ansteuert,
- welche dabei die Summe der in die Behandlungseinrichtungen aufgenommenen Nachrichtenzellen erfaßt,
- welche die Behandlungseinrichtungen (MBHE, SBHE, ..., SBHE3) zyklisch nacheinander für die Weiterleitung aufgenommener Nachrichtensignale freigibt
- und welche leldiglich bei einer erfaßten Summe > 0 für die momentan in die Behandlungseinrichtungen aufgenommenen Nachrichtenzellen diese Summe dekrementiert und nach dem Weiterleiten einer Nachrichtenzelle durch eine gerade freigegebene Behandlungseinrichtung eine dieser nachfolgende Behandlungseinrichtung freigibt,
und daß sämtliche Behandlungseinrichtungen (MBHE, SBHE1, ..., SBHE3) jeweils eine zweite Steuereinrichtung (SST) aufweisen,
- welche auf eine Ansteuerung durch die erste Steuereinrichtung (MST) hin die Aufnahme einer Nachrichtenzelle in die jeweilige Behandlungseinrichtung gestattet,
- welche auf eine Freigabe durch die erste Steuereinrichtung (MST) hin im Zuge eines internen Steuerzyklus die Weiterleitung einer in die jeweilige Behandlungseinrichtung aufgenommenen Nachrichtenzelle unter Beifügen einer für die jeweilige virtuelle Verbindung bzw. den jeweiligen virtuellen Pfad bereitgestellten Folgenummer an die ATM-Kommunikationseinrichtung (ATM-K) gestattet
- und welche die gerade bereitgestellte Folgenummer für eine nachfolgende Nachrichtenzelle der jeweiligen virtuellen Verbindung bzw. des jeweiligen virtuellen Pfades aktualisiert.

5. Schaltungsanordnung nach Anspruch 4,
**dadurch gekennzeichnet,**
daß sämtliche Behandlungseinrichtungen (MBHE, SBHE1,..., SBHE3) über eine erste und eine zweite Steuereinrichtung (MST und SST) verfügen, jedoch die erste Steuereinrichtung (MST) in lediglich einer der Behandlungseinrichtungen aktiviert ist.

6. Schaltungsanordnung nach Anspruch 4 oder 5,
**dadurch gekennzeichnet,**
daß sämtlichen Behandlungseinrichtungen (MBHE, SBHE1,..., SBHE3) gemeinsam ein Folgenummern-Speicher (RAM) mit einer Mehrzahl von Speicherzellen zugeordnet ist, in welchen individuell für die einzelnen virtuellen Verbindungen bzw. virtuellen Pfade eine gerade aktuelle Folgenummer gespeichert ist,
daß die Speicherzellen im Zuge eines internen Zellenzyklus einer durch die Master-Behandlungseinrichtung gerade freigegebenen Behandlungseinrichtung nach Maßgabe des in dem ursprünglichen Zellenkopf einer weiterzuleitenden Nachrichtenzelle enthaltenen Kennzeichens individuell ansteuerbar sind,
und daß auf eine solche Ansteuerung einer Speicherzelle hin von dieser zunächst die aktuelle Folgenummer bereitgestellt und anschließend unter der Steuerung der jeweiligen Behandlungseinrichtung eine geänderte Folgenummer unter Überschreiben der bisher aktuellen Folgenummer aufgenommen wird.

7. Schaltungsanordnung nach einem der Ansprüche 1 bis 6,
**dadurch gekennzeichnet,**
daß die erste Steuereinrichtung (MST) der Master-Behandlungseinrichtung (MBHE) über zwei gesonderte Steuerbusse (BUS1, BUS2) mit den zweiten Steuereinrichtungen (SST) sämtlicher Behandlungseinrichtungen (MBHE, SBHE1,..., SBHE3) in Verbindung steht, um diese über die Steuerbusse für die Aufnahme von Nachrichtenzellen anzusteuern bzw. für die Weiterleitung aufgenommener Nachrichtenzellen freizugeben.
